# EUROPEAN PATENT APPLICATION

(11) **EP 3 217 350 A1**
(43) Date of publication of application: **13.09.2017**
(21) Application number: 16861088.9
(22) Date of filing: 11.10.2016
(51) Int. Cl.: G06Q 50/00, G06Q 50/30

(54) **SOCIAL NETWORK SYSTEM AND METHOD FOR DISPLAYING USER INFORMATION THEREIN**

(30) Priority: 18.11.2015 KR 20150161862
(71) Applicant: Cho, Hunyeong, Goyang-si, Gyeonggi-do 10374 (KR); Cho, Gyeongeun, Goyang-si, Gyeonggi-do 10374 (KR)
(72) Inventor: Cho, Hunyeong, Goyang-si, Gyeonggi-do 10374 (KR); Cho, Gyeongeun, Goyang-si, Gyeonggi-do 10374 (KR)
(74) Representative: Vossius & Partner Patentanwälte Rechtsanwälte mbB
(86) International application number: PCT/KR2016/011368
(87) International publication number: WO 2017/086602

(57) **Abstract**

The present invention relates to a social network service system and a method for displaying user information in a social network service. In an embodiment, the social network service system comprises a network unit, storage, a database and a processing unit. The processing unit may register a content gift in content gift information for a first user and a second user, and store the content gift in the storage, when the content gift is provided from the first user to the second user. The processing unit may generate gift display configuration information indicating which of two or more content gifts to display in a user information area and store the gift display configuration information in the database, when a user received the two or more content gifts from one or more users who are friends with in the SNS.

## Description

### [Technical Field]

The present invention relates to a social network service system and a method for displaying user information in a social network service, and more particularly relates to a method for displaying contents received by a user from a friend on a social network service screen when displaying information about the user on the social network service screen.

### [Background Art]

Most work, entertainment, and communication with others are made on computers connected to networks, and smart devices such as smartphones and smart tablets which are widely used. Users can interact with other people in a one-on-one chat while chatting in groups through chat programs (or applications) such as KakaoTalk, Skype, and Line, and can exchange personal information with texts and videos with friends through social network service (SNS) programs such as Facebook, Twitter, Instagram, et al.

In the user information display area displaying the information about a user who is a chat partner or a user who publishes a news on the screen performing the function of the chat application or the SNS application, the photograph and user name or nickname inputted by the user are displayed.

However, in the application, the user information display area can not be fully filled with only the user picture and the user name, and a large part of the area is left as an empty space.

### [Disclosure]

### [Technical Problem]

The present invention has been made in view of the above circumstances, and it is an objective of the present invention to provide a method for richly populating a user information display area in which user information is displayed in an SNS application.

It is another objective of the present invention to provide a method for representing user information in various angles in an SNS application.

### [Technical Solution]

According to an aspect of the present invention, there is provided a social network service system comprising: a network unit configured to exchange data with a user terminal performing an application of a Social Network Service (SNS); storage configured to store data; a database configured to store user information; and a processing unit configured to control the database to register, in content gift information for a first user and a second user, a content gift and to store the content gift in the storage when the content gift is provided from the first user to the second user so as to be displayed as user information of the second user on an SNS screen for a user who has made a friend with the second user, wherein when the second user receives two or more content gifts from one or more users who are friends in the SNS, the processing unit is configured to generate gift display configuration information indicating how the received two or more content gifts are to be displayed in a user information area, in which information about the second user is displayed, on the SNS screen, and store the gift display configuration information in the database as a part of the content gift information for the second user.

In an embodiment, the processing unit may generate data for the content gift using the contetnt gift information in the database and provide the data to a corresponding user who has made a friend with the second user in SNS when sending to the corresponding user the user information of the second user which is displayed on the SNS screen of the corresponding user.

In an embodiment, the data for the content gift may comprise a text, or the data for the content gift may comprise a gift title composed of a text or a thumbnail image and further comprise a link for connecting a multimedia content when the content gift is the multimedia content.

In an embodiment, the content gift information may include received gift information on gifts received by a user and outgoing gift information on gifts given by the user.

In an embodiment, the received gift information may include a number of gifts received by a corresponding user and data on each gift, and the data on each gift may include an identifier of a user who gave a corresponding gift, a kind of the corresponding gift, and data necessary for reproducing the corresponding gift.

In an embodiment, the outgoing gift information may include a number of gifts given by a corresponding user and an identifier of a specific user who received the gift from the corresponding user.

In an embodiment, upon receiving a request from a corresponding user to leave the SNS, the processing unit may deletes data related to the corresponding user from the content gift information of a specific user who received a gift from the corresponding user based on the outgoing gift information of the corresponding user.

In an embodiment, upon receiving a request from the corresponding user to leave the SNS, the processing unit may delete a content gift, given to another user by the corresponding user to another user and stored in the storage, from the storage but may not delete the content gift when the content gift stored in the storage is used by other user.

In an embodiment, the processing unit may inquire of the second user whether or not to receive the content gift, when the content gift is provided from the first user to the second user so as to be displayed as user information of the second user on an SNS screen for a user who has made a friend with the second user.

In an embodiment, the processing unit may store a text as a new content gift in the storage while deleting a private expression included in the text if the content gift is the text input by the first user, when the content gift is provided from the first user to the second user.

According to another aspect of the present invention, there is provided a method for displaying user information in social network service (SNS), comprising: displaying user information on a second user who has made a friend with a first user in a user information area of the SNS; and displaying content in a content area input by the second user, wherein the user information area and the content area are included in an SNS screen of a user, and the user information area includes a space for displaying a content gift received by the second user from at least one user among other users including the first user.

In an embodiment, the user information area may further include another space for displaying the user information input by the second user or the first user.

In an embodiment, the method may further comprise displaying the user information on the first user in the the user information area which includes a space for displaying user information input by the first user and a space for displaying the content gift receviced by the first user from another user.

In an embodiment, the method may further comprise presenting a user who has made a friend with a content gift to be displayed as a part of the user information of the user.

In an embodiment, the method may further comprise responding to an inquiry according to an input of a user, when receiving the inquiry as to whether or not to receive a content gift to be displayed as a part of the user information of the first user from a user who has made a friend in the SNS.

In an embodiment, the method may further comprise displaying one or more content gifts received by the second user, when a symbol is selected in a state the symbol is displayed in the space for displaying the content gift.

In an embodiment, when one among one or more displayed content gifts is selected, an interface may be provided which allows the selected one to be reproduced or presented to another user.

In an embodiment, the method may further comprise editing a condition indicating which of two or more content gifts is to be displayed in the user information area in which the user information on the first user is displayed on an SNS screen of users including the first user, when the first user receives the two or more content gifts from one or more users who have made friends.

### [Advantageous Effect]

Accordingly, a user can more positively express himself or herself through the content received as a gift from the SNS or the chat application.

In addition, it is possible to view the information representing other user from various angles in the SNS or the chat application, thereby widening the understanding of the other user and feeling more intimacy.

It also provides users with the motivation to actively use the SNS application.

### [Description of Drawings]

The accompanying drawings, which are included to provide a further understanding of the invention and are incorporated in and constitute a part of this specification, illustrate embodiments of the invention and together with the description serve to explain the principles of the invention. In the drawings:
Fig. 1 shows a configuration of a terminal to which the present invention is applied,
Fig. 2 schematically shows a configuration of a server operating an application to which a method according to the present invention is applied,
FIG. 3 illustrates a process of providing a content gift with the consent of the other user and registering a received content gift in a user's account, according to an embodiment of the present invention,
FIG. 4 illustrates an application screen for inquiring whether to receive a content gift to be displayed in a user information display area according to an embodiment of the present invention,
FIG. 5 illustrates an arrangement for storing information related to a content gift in a user account according to an embodiment of the present invention,
Fig. 6 illustrates a configuration of a user information area displayed on an SNS application screen according to an embodiment of the present invention,
Fig. 7 illustrates a process of displaying a content of a user and information of the corresponding user on a screen of another user when the user publishes the content in an SNS application according to an embodiment of the present invention,
Fig. 8 shows that a received content gift is displayed in a user information display area on an SNS application screen according to an embodiment of the present invention,
FIG. 9 illustrates a process of obtaining information of a counterpart user to be displayed on a screen when the counterpart user is selected in a chat application according to an embodiment of the present invention,
FIG. 10 illustrates that a received content gift is displayed in a user information display area on a caht application screen according to an embodiment of the present invention, and
FIG. 11 illustrates a process of processing a user's account and a gift given to another user by the user when the user leaves the application according to an embodiment of the present invention.

### [Mode for Invention]

Reference will now be made in detail to embodiments of the invention, examples of which are illustrated in the accompanying drawings. Wherever possible, the same reference numbers will be used throughout the drawings to refer to the same or like parts. etailed description of known arts will be omitted if it is determined that the arts can mislead the embodiments of the invention.

Hereinafter, embodiments of a social network service system and a method for displaying user information a social network service according to the present invention will be described in detail with reference to the accompanying drawings.

The present invention relates to a method for expressing or showing me which is defined by another person or me as an object of interest by another person, in SNS.

To this end, the present invention provides a gift display function that displays a gift received from another user when a user or user's information is displayed on a chat application screen or an SNS application screen.

That is, according to the present invention, when a user who inputs a chat message or posts an article is displayed while displaying the chat message or the article, not only the user information input by the user but also the contents are displayed together in a user information display area.

Hereinafter, for convenience, it is assumed that a chat application or an SNS application is unified as an SNS application, a chat message input by a user or an article posted by a user is unified into a content inputted by the user, and the content which is received from another user and to be displayed in the user information display area is expressed as a content gift.

The content gift received from another friend or another user may include a text in the form of a banner depicting a user, an image such as a caricature or a photograph depicting the user, an emblem or a badge image indicating a school or a company to which the user belongs, a link to a site that includes audio such as music, animation, video, content, and the like that match the user.

The content gift to be displayed in the user information display area can not be presented to the user himself or herself but can be received from another user. In addition, since the received gift content is displayed in the user information display area included in the screen of another user, the user can decide whether or not to receive the content gift, and if the content gift is once received, arbitrary deletion of the contents gift can be limited. Also, if another user who gave the content gift leaves the SNS application, the content gift received from the another user can be deleted from the gift box of the user who received the content gift, and can not be displayed gift in the user information display area.

In addition, a user who receives two or more content gifts may select which content gift to display in his/her user information display area on the screen of another user, and set the method about how to select two or more content gifts and how to display one of the selected content gifts while changing the one.

The user of the SNS application may give a content gift created by himself/herself to another user or a content gift stored in a gift warehouse of a server operating the application. In addition, the user of the SNS application can select a content gift included in another user's gift box on his/her application screen without passing through a separate path for giving a content gift (without selecting it from the gift warehouse) and directly deliver it to another user.

The SNS application according to the present invention can perform the following functions.

First, it can be used as a means of exerting influence to an opponent or feeling a feeling of belonging to a specific group, or as an advertising means of a specific group. For example, a company A sends a gift containing the logo of company A to employees through the gift display fuction such that the logo is displayed next to the employee's name, thereby inducing the employee's sense of belonging, pride, or loyalty. In addition, the company will be able to gain advertising effect by exposing its company logo on the screen of the employees' SNS. In addition, when a company A releases a new product, it sends the image of the new product as a content gift and makes the image displayed during the SNS activity of the employee, thereby enhancing the advertisement effect. Moreover, a fee may be charged for a content gift corresponding to such an advertisement to generate advertising revenue to the SNS operator.

In addition, such the gift display function can be used as an online badge in many places such as schools, religious organizations, and the like. B university transmits the emblem of B university as a content gift to the students of B university so as for the emblem to be exposed to students' chat situations, so the students become proud, and even if they are reluctant to brag about themselves, they can proudly display their school by borrowing a forced gift form.

Next, lovers, couples, and friends can use the gift display function to monopolize each other. SNS user C transmits the phrase "D is a lover of C" to the person D between the lovers with a bouquet photo through the gift display function, so as to show the relationship between C and D to third persons and to maintain the relationship stably.

In addition, by looking at the presents of various people for a specific person in a chat or SNS space, it is possible to see the viewpoints of other persons, and to broaden the understanding of the specific person. For example, when someone other than me sends to a friend E a "Don Quixote E" phrase along with a picture of Don Quixote depicting the situation that Don Quixote is heading for a windmill, and the picture and the phrase are displayed beside the name of E on a SNS screen, you can get a glimpse of E that is different from E you feel.

The SNS application according to the present invention may include the following functions.

In order to induce the continuous use of the SNS application to which the present invention is applied, when a application user stops using the application and leaves the application, the function of causing the content gift sent by the application user to be deleted from a gift box of the user who received the content gift can be implemented in the present invention,

In addition, the present invention can be implemented such that only an evaluation by another user (a gift given by another user) can be allowed to be displayed as a content gift, the content gift is sent only to other users without allowing the user to decorate himself/herself. In other words, if you want to receive a content gift, you will have to give it to another user, which increases the frequency of use of the application and creates a favorable climate to exchange gifts.

In addition, in order to distinguish the content gift from the information (photograph, name, nickname, etc.) directly input by the user in the user information display area, a symbol or mark indicating the gift box is displayed in the area where the content gift is displayed, so the content displayed in the corresponding area can be made to indicate that it is my appearance expressed by another user.

In addition, the function of allowing a user to view other content gifts included in a gift box in addition to a content gift displayed in a gift display area can be implemented, when a gift box symbol included in a user information display area is selected in a situation in which a chat message is exchanged with another user or a content input by another user is posted. So, it is possible to get a glimpse of the popularity and evaluation of a user from the number of gifts or contents. That is, in principle, the content gift included in the gift box can be disclosed to other users.

A function may be implemented to prevent other users from viewing other content gifts other than the content gifts forced to be displayed to other users among the content gifts included in the gift box, in order to prevent excessive exposure of the user. It may be set by a user, or set automatically by an operator such that some contents gifts are open at odd months and not being open even months.

In addition to the content gifts created and stored by the operator of the gift box function, the content gifts made by users and given to other users can be stored in a gift warehouse of a storage server so that it can be used by other users. User-created images, audio, moving images, animations, etc. are automatically stored on a storage server (provided as a link to other users) and can be shared by multiple users, when they are presented to other users as a gift. But, the text, such as a banner, can be stored in a partner's account, then stored in a storage as a new gift with personal expressions contained in the text being deleted.

When the number of characters of the text included in the content gift (the number of characters that can be accommodated in the gift display area of the user information display area) exceeds a certain amount, only a part of the text is displayed when the text gift is displayed, and when a user selects (touch) the text, it is possible to display all the text in a new window in a pop-up form, for example.

If the received gifts exceed a predetermined amount, the user may delete some gifts received first or may select some gifts to be deleted according to a predetermined criterion, or the gifts that have passed a predetermined time may be automatically deleted.

The function can be implemented to directly select a content gift included in a specific user's gift box on the SNS screen without accessing a page that allows a user to select a gift stored in the storage warehouse of the storage, when selecting a content gift to be sent to another user.

A function may be implemented to link to a specific advertisement or a specific page (for example, a shopping mall site) when a counterpart user selects (touches or clicks) a content gift by adding link information to the content gift given to the counterpart user.

Hereinafter, specific examples in which the SNS application performing the above-mentioned functions is implemented in a user terminal (e.g., a smart terminal) and a server will be described. The configuration of the SNS screen, the sequential operating flow between a user's terminal and a server according to a user's operation, the form of gift box data managed in a database, and the like will be described.

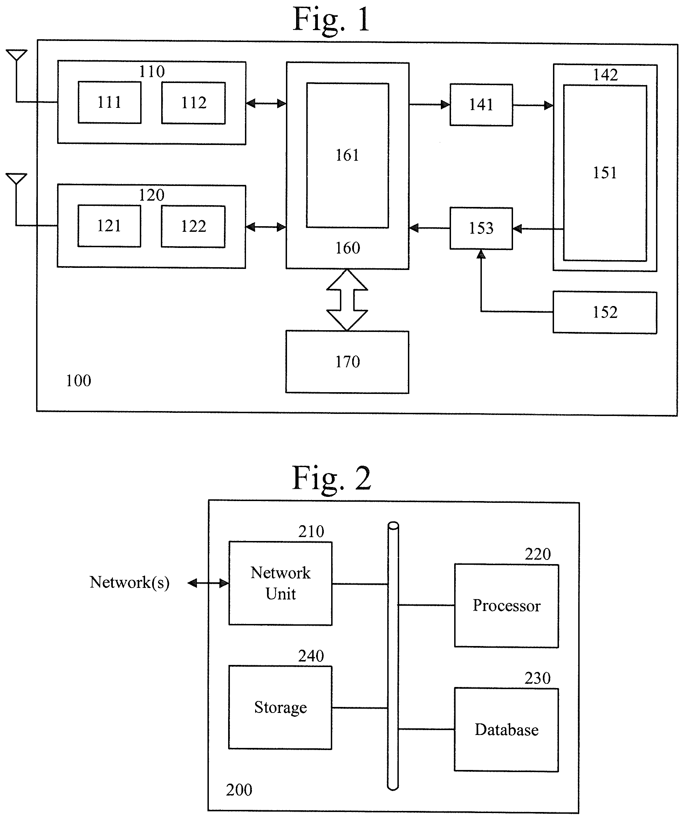

FIG. 1 illustrates a configuration of a terminal to which the present invention is applied, and illustrates a configuration of a terminal 100 such as a smart phone for exchanging a content gift and displaying a received content gift through an SNS application.

The terminal 100 may be any one of a smart phone, a tablet computer, a notebook, and a mobile Internet device capable of accessing at least one of a public mobile communication network 20 and a high-speed wired and wireless LAN network. The description will be based on the mobile terminal.

The terminal 100 may include a wireless LAN module 110, a cellular module 120, a GPS module 130 for receiving GPS signals and calculating current position coordinate information, an output module 140, an input module 150, a control unit 160, a memory 170, and the like. The cellular module 120 may be omitted from a smart device or a computer without a mobile phone function. In addition, the wireless LAN module 110 and the cellular module 120 may be collectively referred to as a communication module or a communication unit as a configuration for exchanging data with the outside.

The wireless LAN module 110 may include a wireless LAN modem 111 (a component for processing an RF signal) that modulates or demodulates a signal according to a designated method of a high-speed wireless data network, for example, a Wi-Fi wireless LAN network, and a wireless LAN codec 112 for encoding data or decoding encoded data according to a communication protocol adopted in a wireless data network.

The cellular module 120 may include a cellular modem 121 (a component for processing an RF signal) that modulates or demodulates a signal according to a designated method of a public mobile communication network, for example, a 2G, 3G, or 4G cellular network, and a cellular codec 122 that encodes and decoding encoded data according to a communication protocol adopted in a mobile communication network.

The output module 140 may include a display panel 142 for displaying images and characters and a display driver 141 for driving the display panel 142 so that data is visually displayed on the display panel 142. The output module 140 may further include a speaker for outputting an audio signal or an external output terminal for line-outputting an audio signal.

The input module 150 includes a touch sensor 151 attached to the front surface of the display panel 132, a key pad 152 having a key and/or a button, and an input control unit 153 for sensing user input and/or selection through the touch sensor 151 and the keypad 152 and outputting corresponding input information. And, the input module 150 may further include a microphone for capturing a voice or an audio signal, and a camera for capturing an image or a moving image.

The control unit 160 may appropriately transmit data to or receive signals from and conrol corresponding components so that the operations according to the input information from the input module 150 are performed, and control the display driver 141 to display a UI screen for displaying results according the operations or selecting a desired operation. The memory 170 provides a data storage space necessary for the operation of the control unit 160 or a process executed thereby.

The control unit 160 may include an operating system (O/S) 161 for driving hardware resources of the terminal 100 and performing an appropriate signal and/or information exchange with corresponding resources by executing command codes such as firmware. The operation of the control unit 160 or the operation of the application executed by the operation of the control unit 160 is based on the premise of an appropriate intermediary operation (for example, the specific functions provided by the hardware components of FIG. 1 and the operating system 161 through appropriate APIs (Application Program Interface), such as input/output through a screen, communications with an outside part based on a protocol, performing operations by requesting hardware status check, timer, etc.) of the operating system 161, and a description of the intermediate operation will be omitted.

The configuration of the terminal 100 illustrated in FIG. 1 is merely an example for showing a specific and illustrative description of the present invention, and may further include various functional elements not shown. However, even if the present invention further includes an unillustrated component, a terminal that implements the concept and subject of the present invention by implementing the concept and subject matter of the present invention, which is exemplarily described below, or by executing a separate application, it is to be understood that they fall within the scope of the present invention.

The control unit 160 may install and execute the SNS application in the operating system (O/S) 161 according to the user's selection, display through the output module 140 contents such as texts or chat messages input by a user according to the input of the user through the input module 150, transmit the generated contents to a counterpart user via the server through the wireless LAN module 110 or the cellular module 120, receive the content input by the counterpart user and displays the received content through the output module 140, provide a content gift to the counterpart user or receive a content gift from the counterpart user, receive the user information of a specific user from the server, and display the content gift included therein in a user information display area together with an article posted by the specific user or a chat message input by the specific user while chatting with the specific user.

Hereinafter, the control operations performed by the controller 160 for the LAN module 110, the cellular module 120, and the output module 140 in order to input, display and transmit contents will be described as being performed by the chat application for convenience.

Fig. 2 schematically shows a configuration of a server operating an application to which a method according to the present invention is applied. The server 200 operating the SNS application may be configured to include a network unit 210 and a processor 220, and the processor 220 may include database 230 and storage 240 internally or externally.

The server 200 may be configured such that each component is constituted by one device independent of each other. When each component is constructed as a separate device, for example, a server, it is interconnected with a dedicated line or a dedicated network between them, and they communicate with each other according to an appropriate network security communication protocol, and work together to mediate data related to the chat application and to perform security functions.

The network unit 210 communicates with a user terminal on which an SNS application is executed to exchange data. The network unit 210 receives content data such as messages and texts created by users of the SNS application and transmits the received content data to a partner, or transfers content gift data from a first user to a second user, or allows the user terminal to download the SNS application installation data or update data.

The database 230 stores user information related to a user. The database 230 may store and manage data directly input by a user such as a name, a nickname, photographs, a subscription date, information related to content gifts received from and given to another user (the number of received content gifts, and for each gift, a specific user who has given the corresponding gift, content type, content name or text and/or link information, content display configuration information, the number and user IDs of users who received a content gift from a corresponding user, etc), or the like.

The storage 240 stores SNS application execution data, update data, and operation data necessary for the SNS application system in the server 200 in association with the operation of the system, and stores data about content, such as chat data that are made between users, user-posted articles, pictures, music, videos, animations, etc.

The storage 240 also provides a gift store (or gift warehouse) associated with the content gift displayed as a part of the user information, stores banners in a text form, image files, audio files, video files, animation files, etc. therein and also stores data that constitutes a content gift given by a corresponding user to another user.

The processor 220 may control the network unit 210 to deliver content data such as chat messages and articles created by another user to the user or a content gift prepared by another user and control the database 230 and the storage 240 to store content data, gift data, and the like, and to update user information.

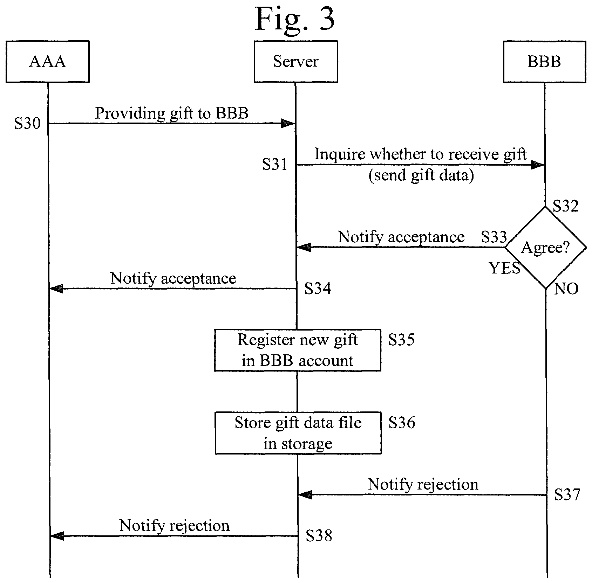

FIG. 3 illustrates a process of providing a content gift with the consent of the other user and registering a received content gift in a user's account, according to an embodiment of the present invention.

First, the SNS application user AAA designates a content gift and a user BBB to receive the content gift (indicating the content gift is to be displayed in a user information display area of the user BBB on the screen of the SNS application), and send the data including the content gift and the user BBB to a server (S30).

The user can select the content gift stored in the gift warehouse of the storage 240, input the content gift which the user himself or herself has created, or select the content gift included in the gift box of another user in the user information display area of the another user.

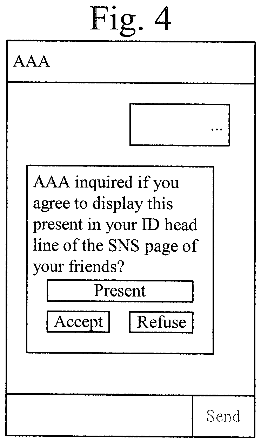

The server inquires of the user BBB whether or not to receive the present gift while delivering the content gift delivered from the user AAA (S31). As shown in FIG. 4, the screen of the user BBB may display a message informing that the content gift is to be given from the user AAA and inquiring whether to accept or reject the content gift, a button (Accept) for accepting the content gift and a button (Refuse) for refusing the content gift.

If the user BBB agrees to accept by operating the Accept button (YES in S32), the SNS application operated by the user BBB terminal notifies the server of the acceptance (S33), and the server notifies the user AAA of the agreement of the user BBB (S34).

Thereafter, the server updates the information related to the content gift by registering a new content gift in the user BBB account (i.e., in user information) managed in the database 230 (S35). If a multimedia data file such as image, audio, video, or animation is included in the content gift, the server stores the multimedia data file in the gift warehouse of the storage 240 (S36).

When the server stores the multimedia data file included in the content gift that the user AAA forwards to the user BBB in the gift warehouse of the storage 240, the server can generate and store a link to the data file for the content gift as the data for the content gift in the gift box of the user BBB's account. In addition, when the server stores text such as a banner included in the content gift delivered by the user AAA to the user BBB in the gift warehouse, the server may store data in the gift warehouse with the private representations contained in the text being deleted, but save the data including all the text sent by the user AAA in the gift box of the user BBB's account.

In step S35, the server may also update the user AAA's account managed in the database 230. The server may increase the number of target users that the user AAA has given content gifts or may newly register the identifier of the target user BBB to which the user AAA has given the content gift in the user AAA's account (if the user BBB has already been registered as a user who received a content gift from the user AAA in the user AAA's account, there is no need to modify the user AAA's account).

If the user BBB refuses by operating the Refuse button (NO in S32), the SNS application operated by the user BBB terminal notifies the server of the rejection (S37), and the server also notifies the user AAA of the rejection of the user BBB (S38).

In the description relsted to FIG. 3, it is assumed that the server performs operations, however, it can be understood that the operations of the server are performed by an operation program operating in the processing unit 220 or the processing unit 220 included in the server.

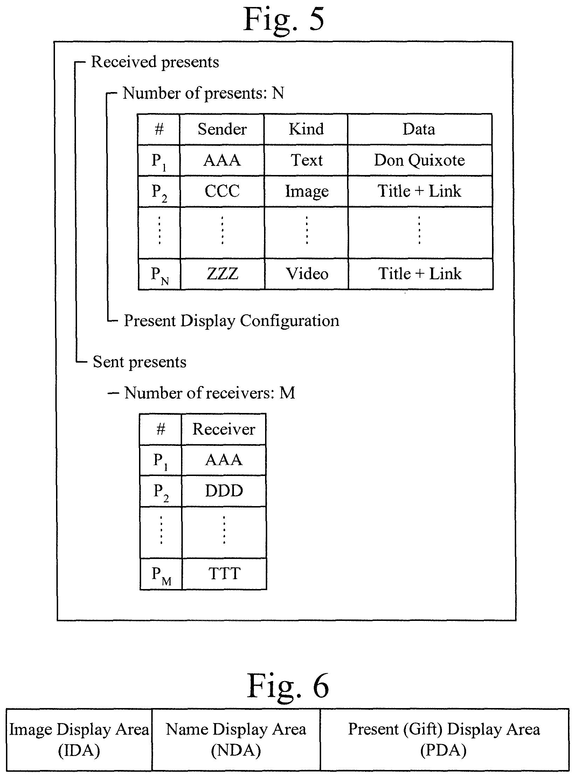

FIG. 5 illustrates an arrangement for storing information related to a content gift in a user account according to an embodiment of the present invention.

The user account includes, in the database 230, user input information (not shown in FIG. 5) such as a user name, a nickname, and a photograph directly input by the user and gift information. The gift information may include received (or incoming) gift information (or gift box information) received by the user and displayed as a part of the corresponding user information, and transmited (or outgoing) gift information sent from the user.

The received gift information or gift box information received by the user may include the number of the received content gifts, data for each content gift, and gift display configuration information. The data for each content gift may include the user who sent the gift, the type of gift (e.g., text, image, audio, video, animation, etc.) and the data needed to reproduce (or open) the gift. The data for each content gift may further include the time information to which the corresponding gift is delivered.

The data necessary to reproduce the gift includes all the text contents when the gift is in the form of a text, and may include a title in the form of a text describing the gift and link information for connecting the storage 240 in which the data file for the gift is stored if the gift is multimedia data. The data necessary to reproduce the gift may include a thumbnail image in the case of image data or a thumbnail image for a representative still image in the case of a moving image or an animation, instead of the title in the form of a text.

The gift display configuration information may store information related to how the content gifts included in the gift box are displayed in the user information display area for the user on the SNS screen of the user or the SNS screen of the other user or which content gift is selected and displayed. Since the gift display area for displaying the content gift in the user information display area is limited, if the user has received a large amount of content gifts, the user can not display all of the gift gifts at once. Therefore, the gift display configuration information may store a display condition related to the order of displaying the gifts or the time interval for displaying the gifts, and may have a set value set by the user or a default value set by the operator.

In addition, the transmited gift information sent by the user A may include the number of other users who received the content gifts sent by the user A, and the identification information of each of the other users. This is because it is necessary to erase the content gifts received from the user A in the gift boxs of the users who received the content gift from the user A when the user A leaves the SNS. As another example, the outgoing gift information may be composed of the number of users received, and the received user, gift type, and gift data for each of the received users, similar to the received gift information. The number of content gifts sent by the user and the number of users who receive the content gift from the user may not match because the user sometimes presents the content gift twice to one other user.

It is more advantageous to store the data in the form of the former rather than in the form of the latter, but the latter can be advantageous in that it can be immediately identified what gift he/she has sent (in the former case, it is possible to check what gift is sent, but it is necessary to search the user who sent the gift for the gift boxes of the received users and chenk what gift is sent).

Fig. 6 illustrates a configuration of a user information area displayed on an SNS application screen according to an embodiment of the present invention. In the general SNS screen, the user information display area displays a user picture and a user name (or nickname). Since the user information display area is narrow in a vertical direction, when a small picture and a name are displayed, the space on the right side thereof is left empty.

In the present invention, in order to use such empty space, as shown in FIG. 6, the user information display area is provided with an image display area (IDA), a name display area (NDA), and a gift display area (PDA) for displaying one of the contents gifts received by the user. Alternatively, the user photograph and the user name may be deleted in the user information display area, and only the content gift may be displayed.

In the gift display area, a symbol representing a gift, for example, a small gift image, may be displayed to indicate that the space is a space for displaying the content gift received by the user.

In the user information display area, the data to be displayed in the photo display area and the name display area may be filled with information received from the user, but the user information display area may be filled with the information input by the SNS user executing the screen including the user information display area. For example, when the user information of the user BBB is displayed on the SNS screen of the user AAA as shown in FIG. 6, the information of the user BBB may be received from the server and displayed in the photo display area and the name display area, but instead a picture or name of the user BBB managed by the user AAA in the corresponding SNS application may be displayed. This is because the user AAA effectively distinguishes the user BBB when there are many SNS friends having the same name or nickname as the user BBB.

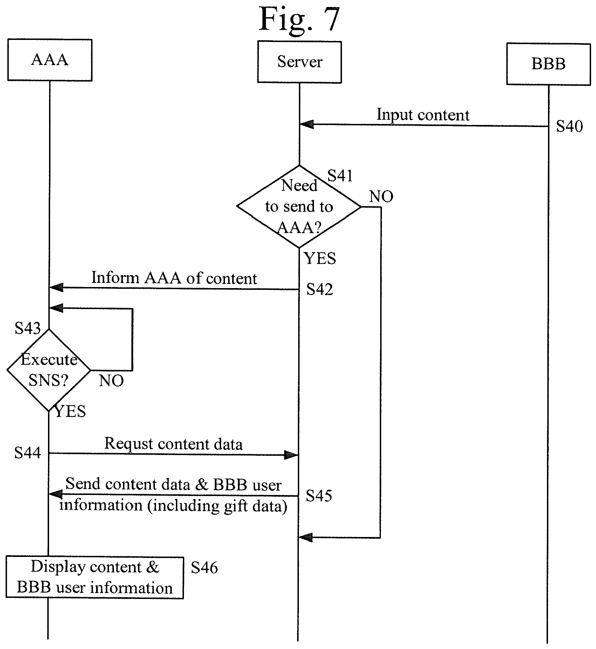

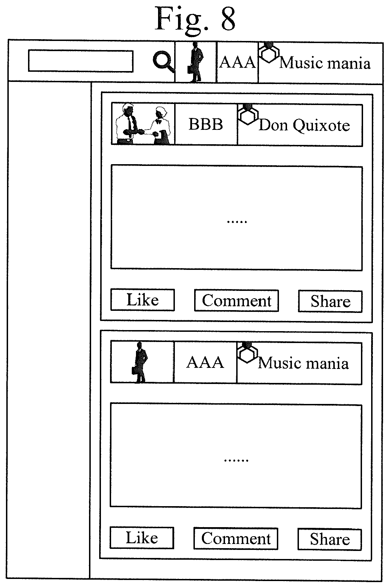

Fig. 7 illustrates a process of displaying a content of a user and information of the corresponding user on a screen of another user when the user publishes the content in an SNS application according to an embodiment of the present invention, and Fig. 8 shows that a received content gift is displayed in a user information display area on an SNS application screen according to an embodiment of the present invention.

First, as the user BBB uploads his or her news on Facebook, the user BBB inputs a content to the SNS (S40). This is implemented in such a manner that the SNS application executed in the user BBB terminal transmits the contents inputted by the user BBB to the server.

The server selects a user to receive the content transmitted by the user BBB (S41). If the user is directly referred to in the content input by the user BBB, the server selects the refered user. Or the server can select a user to whom the content is to be delivered with its own algorithm.

When it is judged that the content input by the user BBB needs to be delivered to a user AAA (YES in S41), the server informs the user AAA that there is the content input by the user BBB (S42), which may be displayed as a notification in the SNS of the user AAA.

If the user AAA does is not executing the SNS (NO in S43), the notification is maintained. If the user AAA executes the SNS (YES in S43), the user AAA (SNS application executed on the user AAA terminal) requests the content data of the BBB to the server (S44).

The server transmits the content data requested by the user AAA together with the user information of the user BBB (S45), and the user information of the user BBB may include the data related to the content gift. The server reads the gift display configuration information from the account of the user BBB and retrieves the content gift corresponding to a display condition (condition of each day, hour and content type) from the received gift information, and transmits it as gift data to the user AAA.

The display conditions included in the gift display configuration information can be set by the user or set to a default value by the operator. The default value may correspond to a value, for example, causing the content gifts stored in the gift box to be sequentially selected or arbitrarily selected for a period of time (e.g., one week). The value set by the user can be a value selecting a content gift to be displayed for each day of the week or a time slot, or selecting a content type. Or some content gifts may be excluded from objects displayed in the gift display area according to a user's selection.

Thereafter, as shown in FIG. 8, the user AAA may display the received gift data in the gift display area together with the BBB user information while displaying the content input by the BBB (S46).

FIG. 8 shows an SNS screen of the user AAA. The SNS screen corresponds to a screen of an SNS application such as a Facebook, an Instagram, or a Twitter, which displays articles posted by the user AAA or articles posted by another users who have made friends with the user AAA.

In FIG. 8, user information is displayed at the top of the screen. Here, the user's own photograph, name or nickname, which is input by the user AAA, is displayed, and one of the contents gifts received from other users by the user AAA is selected and displayed. In addition, the content input by the user BBB is displayed on the timeline as an article or a news. The information of the user BBB received from the server is displayed in the headline of the article (user information display area), the content data is displayed on the body of the article, and buttons (Like, Comment, Share) are provided below the article to input a reaction for the article. One of the content gifts received from other users (Don Quixote) is displayed as the user information of the user BBB in the gift display area as well as a picture and his or her name or nickname directly input by the user BBB.

Although FIGs. 7 and 8 are mainly described with respect to an SNS application, such as Facebook, in which contents are uploaded without designating a partner, the present invention can be applied to a chat application in which a message is transmitted to a specific partner.

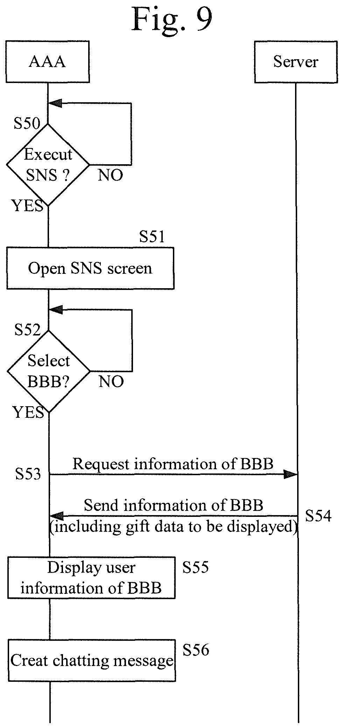

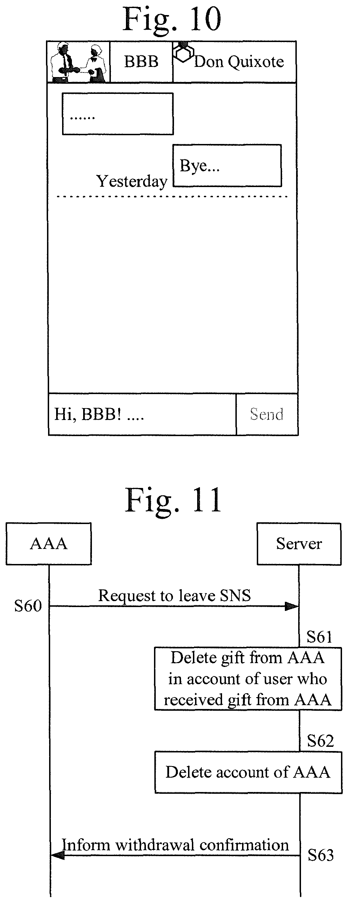

FIG. 9 illustrates a process of obtaining information of a counterpart user to be displayed on a screen when the counterpart user is selected in a chat application according to an embodiment of the present invention, and FIG. 10 illustrates that a received content gift is displayed in a user information display area on a caht application screen according to an embodiment of the present invention.

FIGs. 9 and 10 relate to displaying user information of a counterpart user in a process of selecting the counterpart user to send a message in a chat application such as the Kakaotalk. The chat application screen shown in Fig. 10 includes an area for displaying conversation partner information located at the uppermost position, an area for displaying conversation history exchanged in the middle position, and an area for inputting conversation contents located at the bottom position. In a group chatting screen, the name or members of the group chatting room are listed at the top, chatting history is displayed in the middle, an area for inputting conversation contents is displayed in the bottom, and the message and the information of the user who created the message may be displayed together in the space where the conversation history is displayed.

When the user AAA executes the SNS application (YES in S50), the SNS application opens the SNS screen (S51). When the user AAA selects the user BBB to chat on the SNS screen (YES in S52), the SNS application requests the server information of the user BBB (S53).

Accordingly, the server sends the information of the user BBB to the user AAA (S54). The server reads the gift display configuration information from the user BBB's account, searches the gift box for the content gift corresponding to the display condition included therein, and sends the content gift to the user AAA.

As shown in FIG. 10, when displaying the user information of the BBB, the SNS application displays the received gift data in the gift display area in the user information display area (S55). Then, the user AAA can create a message to be sent to the user BBB, which is a chat partner (S56).

Each time a chat message is exchanged with the other party, the user information of a corresponding user and the other party can be exchanged. However, since it may become a load on the SNS operating system, the user information may be exchanged at a predetermined interval, for example, every 30 minutes apart from the chat message, considering that the gift display configuration information included in the user information is changed.

Meanwhile, when the user information display area having the structure shown in FIG. 6 is displayed on the SNS screen as shown in FIG. 8 or FIG. 10, the gift display area does not display only the user's gift data, but may provide a channel or interface to access other content gifts contained in the user's gift box.

When the user selects (by touch, click, or cursor movement) a gift symbol displayed to indicate the gift display area, the SNS application may request the number of received gifts contained in the gift box of the server gift, receive and display it. Alternatively, when the user information is transmitted from the server, the information on the number of received gifts is transmitted together with the data on the content gift, so that the SNS application can adjust the size, shape or color of the gift symbol, or display the number of received gifts in numerical form near the gift symbol. Thus, the number or amount of the content gifts in the gift box of a corresponding user can be identified without any user's operation.

In addition, when the gift symbol displayed in the gift display area is manipulated by the user, the SNS application may request the server to transmit received gift information, receive it, and display other gifts stored in the gift box of a corresponding user through a new window. The SNS application may also provide a user interface that allows the user to select and open a desired one of the other gifts displayed, and to select a desired gift to present to other users.

Furthermore, the title of the content gift is displayed in a text form or a thumbnail image is displayed in the gift display area. When multimedia data is included in the content gift, link information is further included therein, so the SNS application may reproduce or open the data indicated by the link information (data stored in the internet site or the gift warehouse of the storage 240) by a user's operation (cursor movement, touch or click).

Likewise, a menu or an interface for presenting gifts displayed in the gift display area to other users can be provided. Through such an interface, the convenience of the user to easily select a prominent gift without passing through a gift warehouse managed in the storage 240 and forwad it to another user can be improved.

Although FIGS. 8 and 10 show that only one gift is displayed in the gift display area, more than one gift may be displayed in the gift display area. In this case, the number of gifts to be displayed in the gift display area can be defined in the gift display configuration information.

FIG. 11 illustrates a process of processing a user's account and a gift given to another user by the user when the user leaves the application according to an embodiment of the present invention.

When the user AAA requests to leave the SNS (S60), the server may read the outgoing gift information from the user AAA's account, identify the receiving users who received content gifts from the user AAA, delete the content gift received from the AAA in the gift box (or received gift information) of the accounts of the receiving users, and reduce the number of received gifts by the number of gifts received from the user AAA (S61).

The server may also modify the outgoing gift information of the receiving user's account to reduce the number of users who received a content gift from the receiving user by one and to delete the identification information of the user AAA if the receving user has given a gift to the user AAA who leaves the SNS.

In addition, the server may delete the content gift that the user AAA has newly created and uploaded to the gift warehouse of the storage 240 while giving the content gift to another user. The operation of deleting from the gift warehouse the content gift uploaded by the user AAA who leaves the SNS may be omitted because the content gift may have been used by another user.

Thereafter, the server deletes the account of the user AAA in the database 230 (S62), and informs the user AAA of the withdrawal confirmation (S63).

Meanwhile, the server can update the received gift information managed in the user account according to a predetermined criterion. For example, if the received content gifts exceed a predetermined number, the server may delete the content gifts that have passed a predetermined time. Alternatively, the server may allow the user to set up gifts that can be deleted and gifts that should not be deleted.

Accordingly, the SNS user can confirm not only the information which is directly input by a specific user who has made a friend in the SNS but also the information on the specific user evaluated by another user, so that there is an effect that they can broaden their understandings, and the number of use of the SNS is increased because the gifts are exchanged with each other.

While the present invention has been particularly shown and described with reference to exemplary embodiments thereof, it is clearly understood by those of ordinary skill in the art that various changes in form and details may be made therein without departing from the spirit and scope of the present invention as defined by the following claims.

### [Industrial Applicability]

The present invention can be applied to SNS and chat applications.

## Claims

1. A social network service system, comprising:
a network unit configured to exchange data with a user terminal performing an application of a Social Network Service (SNS);
storage configured to store data;
a database configured to store user information; and
a processing unit;
wherein when a content gift is provided from a first user to a second user so as to be displayed as user information of the second user on an SNS screen for a user who has made a friend with the second user, the processing unit is configured to inquire of the second user whether or not to receive the content gift, and if the second user agree to receive the content gift, to control the database to register, in content gift information for the first user and the second user, the content gift and to store the content gift in the storage, and
wherein when the second user receives two or more content gifts from one or more users who are friends in the SNS, the processing unit is configured to generate gift display configuration information indicating which of the received two or more content gifts is to be displayed in a user information area, in which information about the second user is displayed, on the SNS screen, and store the gift display configuration information in the database as a part of the content gift information for the second user.

2. The social network service system of claim 1, wherein the processing unit is configured to generate data for the content gift using the contetnt gift information in the database and provide the data to a corresponding user who has made a friend with the second user in SNS when sending to the corresponding user the user information of the second user which is displayed on the SNS screen of the corresponding user.

3. The social network service system of claim 1, wherein the data for the content gift comprises a text, or the data for the content gift comprises a gift title composed of a text or a thumbnail image and further comprises a link for connecting a multimedia content when the content gift is the multimedia content.

4. The social network service system of claim 1, wherein the content gift information includes received gift information on gifts received by a user and outgoing gift information on gifts given by the user.

5. The social network service system of claim 4, wherein the received gift information includes a number of gifts received by a corresponding user and data on each gift, and the data on each gift includes an identifier of a user who gave a corresponding gift, a kind of the corresponding gift, and data necessary for reproducing the corresponding gift .

6. The social network service system of claim 4, wherein the outgoing gift information includes a number of gifts given by a corresponding user and an identifier of a specific user who received the gift from the corresponding user.

7. The social network service system of claim 6, wherein upon receiving a request from a corresponding user to leave the SNS, the processing unit is configured to deletes data related to the corresponding user from the content gift information of a specific user who received a gift from the corresponding user based on the outgoing gift information of the corresponding user.

8. The social network service system of claim 7, wherein upon receiving a request from the corresponding user to leave the SNS, the processing unit is configured to delete a content gift, given to another user by the corresponding user to another user and stored in the storage, from the storage but not to delete the content gift when the content gift stored in the storage is used by other user.

9. The social network service system of claim 1, wherein the processing unit is configured to store a text as a new content gift in the storage while deleting a private expression included in the text if the content gift is the text input by the first user, when the content gift is provided from the first user to the second user.

10. A method for displaying user information in social network service (SNS), comprising:
displaying user information on a second user who has made a friend with a first user in a user information area of the SNS;
displaying content in a content area input by the second user; and
responding to an inquiry according to an input of a user, when receiving the inquiry as to whether or not to receive a content gift to be displayed as a part of the user information of the first user from a user who has made a friend in the SNS,
wherein the user information area and the content area are included in an SNS screen of a user, and the user information area includes a space for displaying the content gift received by the second user from at least one user among other users including the first user.

11. The method of claim 10, wherein the user information area further includes another space for displaying the user information input by the second user or the first user.

12. The method of claim 11, further comprising:
displaying the user information on the first user in the the user information area which includes a space for displaying user information input by the first user and a space for displaying the content gift receviced by the first user from another user.

13. The method of claim 10, further comprising:
presenting a user who has made a friend with a content gift to be displayed as a part of the user information of the user.

14. The method of claim 10, further comprising:
displaying one or more content gifts received by the second user, when a symbol is selected in a state the symbol is displayed in the space for displaying the content gift.

15. The method of claim 10, further comprising:
when one among one or more displayed content gifts is selected, providing an interface which allows the selected one to be reproduced or presented to another user.

16. The method of claim 10, further comprising:
editing a condition indicating which of two or more content gifts is to be displayed in the user information area in which the user information on the first user is displayed, when the first user receives the two or more content gifts from one or more users who have made friends.
